# EUROPEAN PATENT SPECIFICATION

(11) **EP 1 748 636 B1**
(45) Date of publication and mention of the grant of the patent: **19.11.2008**
(21) Application number: 05016443.3
(22) Date of filing: 28.07.2005
(51) Int. Cl.: H04M 9/00

(54) **Improved communication in passenger compartments**
Verbesserte Kommunikation für Innenräume von Kraftfahrzeugen
Communication améliorée pour habitacle de véhicule automobile

(43) Date of publication of application: 31.01.2007
(73) Proprietor: Harman Becker Automotive Systems GmbH, 76307 Karlsbad (DE)
(72) Inventor: Dr. Markus Buck, 88400 Biberach (DE); Haulick, Tim, 89143 Blaubeuren (DE); Dr. Gerhard Schmidt, 89081 Ulm (DE); Tropp, Michael, 89160 Dornstadt (DE)
(74) Representative: Grünecker, Kinkeldey, Stockmair & Schwanhäusser Anwaltssozietät

(56) References cited:
- WO-A-00/30266
- WO-A-01/03413
- US-A1- 2003 032 460
- US-A1- 2003 063 756
- US-A1- 2005 064 835
- US-B1- 6 505 057

## Description

### Field of Invention

The present invention relates to a system and method for audio signal processing in interiors and, in particular, to a system and method for improved verbal communication in passenger compartments.

### Background of the invention

Verbal communication in interiors is often affected by a noisy background and in case of electronically amplified communication feedback effects tend to deteriorate the quality of the processed acoustic signals. A prominent example for communication in interiors is the communication of passengers in vehicular cabins of automobiles. In particular, at high traveling speeds dialogs between back and front passengers are easily disturbed by background noise. If additional audio signals, e.g., from a radio or a CD player, are output during the conversation, the intelligibility of the utterances deteriorates further.

To improve the intelligibility of the passengers' utterances communication system comprising speech processing means have recently been employed in vehicular cabins. Microphones mounted near each seat of the cabin can detect speech signals from the passengers. The microphone signals are processed by a speech signal processing means and output by loudspeakers. Speech signals coming from a back passenger are preferably output by front loudspeakers and vice versa.

Since the passenger compartments represent relatively small interiors, the output signals from the loudspeakers are easily fed back to the microphones, if interior communication system comprising microphones and loudspeakers are used.

Consequently, it is necessary to reduce acoustic feedback that otherwise can cause, e.g., unpleasant echoes. In the worst case, acoustic feedback can even result in a complete breakdown of communication. Reliable feedback reduction means cannot easily be designed, since the reverberating characteristics of vehicular cabins are rather complex.

Basically, two kinds of methods have been employed to reduce feedback effects. Feedback suppression filters working similar to FIR error predictor filters can reduce feedback in a particular frequency by minimizing the power of an output signal in that frequency. The filter coefficients are usually automatically adapted by means of, e.g., the NLMS algorithm. The input signals have to be delayed in order to avoid suppressing of short time correlations that would result in a rather artificial synthesized speech output.

However, the adaptation of the filter coefficient is relatively time consuming, since small adaptation steps are necessary in order to not suppress short time correlated components of verbal utterances. Consequently, abrupt perturbations cannot be suppressed sufficiently fast and may result in audible artifacts.

The FIR filter can be supplemented by some weighted feedback path, which, however, may result in an unstable filter means and thus demands for expansive stability checks. In addition, feedback suppression filters show the principle problem of reducing the feedback component(s) of the acoustic signal in the cost function by damping the corresponding frequency component. The damping thus results in a subsequent enhancing of the power of the feedback component and so on, i.e., a damping oscillation occurs resulting in an unsatisfying reduction of the acoustic feedback effects.

An altemative method makes use of compensation filters. The impulse response of the loudspeaker-compartment-microphone system is estimated and folded with the loudspeaker signal to estimate a feedback signal, which then can be subtracted from the microphone signal.

However, such filters do not work sufficiently reliable, since the automatic adaptation of the filter coefficients suffers from severe correlation problems. Therefore, the adaptive compensation filters cannot guarantee the high quality of speech signals that is necessary for an electronically aided verbal communication in vehicular cabins, for example.

WO 00/30266 A discloses an audio communication system for use in the passenger compartment of a vehicle providing full duplex communication through a plurality of speakers and microphones while substantially eliminating unwanted external interference and feedback. A digital signal processor further integrates an audio entertainment and mobile transceiver subsystems.

US 2005/064835 A1 discloses an audio system and a control system in an automobile wherein the audio system output is automatically muted in response to input signals indicating an incoming call to any of two or more recognized cell phones or pagers. A digital input implementation employs a wire or cable from the cell phone directly to the control system. The cable carries a signal that is asserted whenever an incoming call is detected. An audio input implementation uses a set of audio detectors throughout the vehicle.

US 2003/032460 A1 discloses a wireless multi-user hands-free gateway particularly suited for a vehicle. The wireless hands-free gateway is capable of wireless operation with any of a plurality of wireless phones established on a piconet network within the vehicle. In the disclosed embodiments, the wireless multi-user hands-free gateway automatically identifies users within range, and preferably gives priority use to the user detected or otherwise identified to be the driver of the vehicle.

In conclusion, although complicated and time consuming algorithms have been developed to increase the quality of acoustic and, in particular, speech signals in the context of communication systems in interiors, there is still a need for improving feedback reduction in electronically supported communication in, e.g., vehicular cabins.

Thus, it is an object of the present invention to provide an improved system and method for audio signal processing in interiors, in particular, for an improved communication in passenger compartments as, e.g., automobile passenger compartments.

### Description of the invention

The above mentioned object is achieved by the indoor communication system mounted in or in proximity to a passenger compartment according to claim 1, comprising:
at least one microphone mounted in the passenger compartment;
at least one loudspeaker mounted in the passenger compartment;
a signal processing means mounted in the passenger compartment, wherein the signal processing means comprises an input for receiving an acoustic input signal from the at least one microphone and an output for providing an acoustic output signal based on the acoustic input signal to at least one of the at least one loudspeaker; and
a mobile audio device comprising a microphone and/or a loudspeaker, wherein the signal processing means comprises an input for receiving an acoustic input signal from the microphone of the mobile audio device and an output for providing an acoustic output signal based on the acoustic input signal to the loudspeaker of the mobile audio device.

The mobile audio device may be a telephone headset. The passenger compartment may be a vehicular cabin of an automobile. Due to the complex reverberation characteristics of vehicular cabins of automobiles, the present invention is particularly suitable for indoor communication systems in automobiles.

The signal processing means can output audio signals to the loudspeaker(s) of the mobile audio device(s). For, example audio signals received from one headset can be output to another headset or audios signals detected by a microphone installed in the vehicle can be output via the signal processing means to a headset.

If, e.g., two passengers both wear headsets each comprising loudspeaker(s) and a microphone, they can communicate with each other by means of their headsets. Verbal utterances of a first passenger can be detected by the microphone of his headset and output to the signal processing means. The signal processing means processes the audio signals received from the first passenger's headset and transmits the processed audio signals to a second passenger's headset.

If, e.g., the driver only wears a headset, the microphone of his headset detects his verbal utterances and the headset transmits the corresponding acoustic signals to the signal processing means. The signal processing means outputs the audio signals after processing to loudspeakers that are mounted in the vehicle.

The inventive communication system, thus, provides an improved quality of the acoustic signals provided to communication parties, since microphones near the mouth of the respective speaker can detect the verbal utterances und loudspeakers near the ears of the respective communication parties can output the audio signals received via the signal processing means from the mobile audio device(s) of the other communication parties.

The volume of the output audio signals can be increased as compared to the prior art communication systems that exhibit strong reverberations for relatively high volumes. The signal-to-noise ratio of the audio signals to be processed by the signal processing means is improved, since the audio signals are detected by a microphone near the speaker's mouth instead of a microphone mounted at some distance in the vehicle.

Loudspeakers that are mounted in the vehicle close to the communication party carrying the mobile audio device, e.g., wearing a headset, can be muted and feedback effects can largely or completely be avoided. Consequently, complex and expansive signal processing can significantly be simplified. In a particularly simple embodiment no feedback reduction filtering means and no feedback compensation filtering means are present.

Other examples for mobile audio devices that may be used as components of the communication system are hearing aids and supplemental telephone receivers commonly supplied with hands-free sets.

If a passenger who suffers from hearing problems wears a hearing aid connected to the signal processing means, he can be directly provided with high quality acoustic signals. Otherwise, he had to demand for a relatively high volume of the output by loudspeakers mounted in the vehicle that would result in severe feedback problems.

The mobile audio device as well as microphones and loudspeakers that are mounted in the vehicle may be connected to the signal processing means via a cable connection or, more preferably, via a wireless connection. Connection may be realized utilizing a headunit and/or a car bus system.

The wireless connection may be realized by the Bluetooth technology. Bluetooth represents a short-distance (≤10 m) wireless communication technique that becomes increasingly prevalent. Bluetooth is relatively low in both cost and power consumption, which make it very suitable for mobile devices. The Bluetooth technology makes use of the ISM band (2,402 - 2,480 GHz) that is globally available and license-free. The employed fast frequency hopping method with 1600 frequency changes per second guarantees a relatively high interference resistance.

Besides radio technology, including the Wireless Local Area Network (WLAN), infrared data transmission can be used according to an embodiment of the present invention. In this case the standards of the Infrared Data Association IrDa 1.0, providing a transfer rate up to 115 kBit/s, or the IrDa 1.1, providing a transfer rate up to 4 MBit/s, may preferably used.

It should be noted that besides verbal utterances by other communication parties a passenger wearing, e.g., a headset may receive audio signals by means of this headset from audio devices mounted in the vehicle, as, e.g., a CD player, DVD player, a tuner etc.

The indoor communication system provided herein may further comprise a control means configured to control the signal processing means to transmit an audio signal to the at least one mobile audio device and/or to the at least one loudspeaker mounted in the passenger compartment and to receive an audio signal from the at least one mobile audio device and/or from the at least one microphone mounted in the passenger compartment.

Thus, an efficient control of input and output of audio signals is provided. The control can depend on whether or not a mobile audio device is connected to the signal processing means. Alternatively, the control means can be manually operated by the driver or another passenger to control the signal processing means to transmit/receive signals to/from a mobile audio device. The microphones and loudspeakers mounted in the passenger compartment may also be switched on and off manually. It is to be understood that control of the signal processing means can be performed by controlling, e.g., a headunit, a car bus system or appropriate switches.

The control means may be configured to automatically switch off at least one microphone mounted in the passenger compartment and/or to automatically switch off or reduce the volume of the at least one loudspeaker mounted in the passenger compartment in the vicinity of the at least one mobile audio device, if the at least one mobile audio device is connected to the signal processing means.

Herein, a loudspeaker or a microphone mounted in the passenger compartment is not in the vicinity of a mobile audio device, if it is mounted closer to a seat that is different from the seat on which the passenger wearing or carrying the mobile audio device is positioned than to the latter seat. Other microphones and loudspeaker are considered to be in the vicinity of the mobile audio device.

In addition, in the case of directional microphones a microphone directed towards a passenger wearing or carrying the mobile audio device is considered as a microphone in the vicinity of this mobile audio device, i.e. the control means can be configured to switch off at least one of the directional microphones directed to a passenger who is equipped with one of the mobile audio devices.

As mentioned above the passenger compartment can be a vehicular cabin of an automobile and at least one microphone and at least one loudspeaker can be mounted close to each passenger seat.

If, e.g., the driver only wears a headset, the loudspeaker(s) and/or the microphone(s) close to the driver seat may be switched off, while the other loudspeakers and microphones mounted in the vehicle operate normally. Thereby, no feedback perturbations are caused on the driver's side.

Particularly, in smaller passenger compartments it may be preferred to realize an electronically supported communication between the driver and a front passenger with the back passengers by mobile audio devices used by the former ones and by loudspeakers and possibly microphones mounted in the back of the vehicle. Since the back passengers speak in the direction of the driver and the front passenger, respectively, communication may be carried out without providing the back passengers with mobile audio devices as, e.g., headsets.

According to one embodiment the inventive indoor communication system may further comprise a voice control means comprising a speech recognition means. The voice control may be configured to control, e.g., audio devices as CD players and DVD players or elements of the vehicular cabin as mirrors as windows. In order to operate successfully, the speech recognition means need high quality acoustic input signals. Commands input via microphones close to the speaker's mouth, as in the case of headsets, can be better understood by the speech recognition means than commands input via microphones mounted at some distance from the speaker.

The inventive communication system may further comprises a transceiver for communication with a remote party outside the passenger compartment and the control means may be configured to control the signal processing means to transmit an acoustic signal received from the remote party to at least one of the mobile audio devices without transmitting an audio signal received from a microphone mounted in the passenger compartment or received from one of the at least one mobile audio devices to the at least one of the mobile audio devices that receives the acoustic signal from the remote party via the signal processing means.

If, e.g., the driver only is equipped with a telephone headset comprising a Bluetooth link, he may communicate with other passengers via the headset. Then, if an external telephone call arrives, the control means can stop the indoor communication via the headset and the telephone communication with a remote party can be carried out by means of the headset as usual.

The above mentioned object is also achieved by providing a communication method in a passenger compartment comprising the steps of:
detecting whether at least one passenger is equipped with a mobile audio device and generating a detection signal according to the detection result;
inputting an audio signal from at least one microphone mounted in the passenger compartment or from a first mobile audio device to a signal processing means based on the detection signal; and
processing the audio signal by the signal processing means and outputting the processed audio signal to at least one second mobile audio device and/or at least one loudspeaker mounted in the passenger compartment based on the detection signal.

The detection signal indicates the detection result. If the detection indicates that a first mobile audio device is present, the audio signal can be input from this audio device and if the detection signals indicate that a second mobile audio device is present, the audio signal can be output to the second mobile audio device.

If it is detected that at least one passenger is equipped with a mobile audio device a microphone and/or a loudspeaker mounted in the passenger compartment in the vicinity of the at least one passenger who is equipped with the at least one mobile audio device may be switched off. Audio signals transmitted from one mobile audio device to a signal processing means can be output to loudspeakers mounted in the vehicle and/or to loudspeakers of other mobile audio devices that are also connected with the signal processing means.

According to one embodiment the detection whether one or more of the passengers are equipped with a mobile audio device can be simply carried out in reaction of a manual input given by the passenger(s) or by the establishment of the respective connection between the mobile audio device and the signal processing means.

According to another embodiment, the detection can be carried out automatically by means of signal processing. If, e.g., the driver wears a headset, his utterances can be detected and transmitted to the signal processing means by the microphone of the headset and by one or more microphones mounted in the vicinity of the driver's seat and/or directed to the driver. The signal processing means may compare incoming microphone signals and if the signals from the mobile audio device correspond to the signals received by the mounted microphones, the control means may switch of the latter. Correspondence of the signals from the mobile audio device and the mounted microphones is not necessarily given, since, e.g., the audio mobile device may be connected to the signal processing means but it is not wom/operated by a user.

The inventive method is applicable to communication between several passengers all equipped with headsets, in which case, in principle, no output of audio signals via the loudspeakers mounted in the vehicle is necessary, and also to communication in a vehicle compartment with only a first passenger, i.e. a first communication party, wearing a mobile audio device in form of a hearing aid connected to the signal processing means. In the latter case all mounted loudspeaker are operated normally and audio signals representing utterances by the other passengers are additionally output to the hearing aid of the first passenger.

An example of the inventive method may comprise inputting an audio signal from the first mobile audio device to the signal processing means without inputting an audio signal from a microphone mounted in the passenger compartment in the vicinity of the first mobile audio device and/or outputting the processed audio signal to the at least one second mobile audio device without outputting the processed audio signal to a loudspeaker mounted in the passenger compartment in the vicinity of the at least one second mobile audio device.

Also it may be preferred switching off a microphone mounted in the passenger compartment in the vicinity of a passenger who is equipped with the first mobile audio device and/or in the vicinity of the at least one passenger who is equipped with one of the at least one second mobile audio device.

If, e.g., the driver wears a headset, the microphone(s) and loudspeaker(s) mounted in the vicinity of the driver's seat, i.e. closer to the driver's seat than to the other seats, can be switched off.

Additional features and advantages of the invention will be described with reference to the drawings:
Fig. 1 shows a prior art communication system for a vehicular cabin comprising microphones, loudspeakers, and signal processing means.
Fig. 2 illustrates an example of an in-vehicle communication system according to the invention comprising microphones, loudspeakers, signal processing means and a headset worn by the driver of the vehicle.
Fig. 3 illustrates an example of an in-vehicle communication system according to the invention comprising microphones, loudspeakers, signal processing means and headsets worn by the driver of the vehicle and by another passenger.
Fig. 4 illustrates an example of an in-vehicle communication system according to the invention comprising microphones, loudspeakers, signal processing means and a hearing aid worn by a passenger.

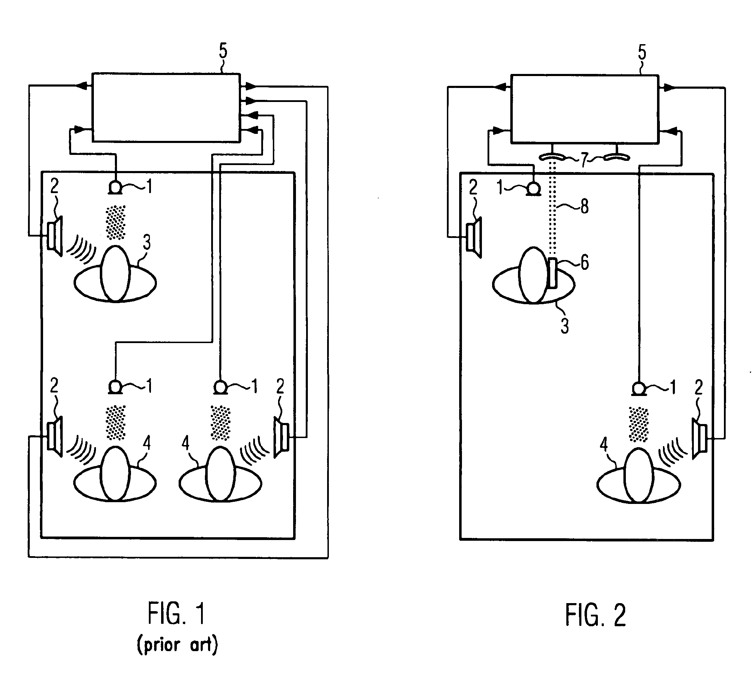

Fig. 1 shows a communication system in a passenger compartment according to the state of the art. Microphones 1 and loudspeakers 2 are mounted in the vicinity of the driver 3 and the passengers 4, respectively. Acoustic signals detected by the microphones 1 are processed by signal processing means 5 and output by the loudspeakers 2. Expansive signal processing is necessary in order to suppress acoustic feedback effects. Audible artifacts can still not be avoided.

Fig. 2 illustrates an embodiment of the present invention. The communication system comprises a headset 6 worn by the driver 3, which is connected to a connector 7 of a signal processing means 5. Connection to the signal processing means 5 can physically be realized, e.g., by a headunit comprising the connector 7. The connection 8 can alternatively by a cable connection or a wireless connection. If the connector 7 is a Bluetooth connector, connection can be realized by the Bluetooth technology. In this case, the Bluetooth headset profile can be used, which is commonly available and well approved in practical applications. Alternatively, the Bluetooth audio profile may be used.

The driver 3 communicates with a backseat passenger 4 by means of the headset 6. Thus, he uses a microphone that is closer to the mouth as compared to the microphone 1 mounted in the vehicle near the seat. Moreover, he uses the loudspeaker(s) of the headset 6 instead of the loudspeaker 2 mounted near the seat. Thus, the front loudspeaker can be muted whereby feedback to the microphone 1 near the driver is avoided. The microphone 1 near the driver can also be switched off.

Consequently, intelligibility of the speech signals is increased for both parties, i.e. the driver 3 and the backseat passenger 4. In this example, the latter one communicates via the microphone 1 and loudspeaker 2 mounted closest to his seat in the vehicle.

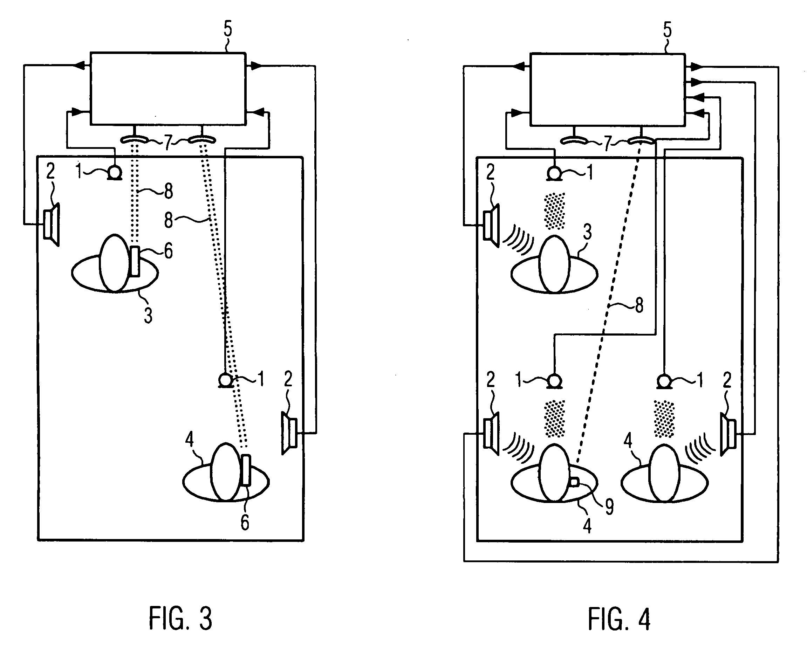

In the example shown in Fig. 3 the backseat passenger 4 also uses a headset 6 connected to the signal processing means 7 of an in-vehicle communication system of the invention, e.g., by a Bluetooth link. Acoustic signals detected by the microphone of the driver's headset 6 are input to the signal processing means 7 and output to the loudspeaker(s) of the headset 6 of the backseat passenger. Acoustic signals detected by the microphone of the headset 6 of the backseat passenger are input to the signal processing means 7 and output to the loudspeaker(s) of the driver's headset 6.

The signal processing means can be very simple as compared to signal processing means in conventional in-vehicle communication systems that comprise feedback reduction filters and/or compensation filters. In the simplest case, the signal processing means of the inventive communication system may comprise A/D- and D/A-conversion without any feedback reduction means.

The microphones 1 and loudspeakers 2 mounted in the vehicle may operate as if no headsets 6 were used. Alternatively, the loudspeakers 2 may be muted and the microphones 1 may be switched off, if the headsets 6 are in use. Whereas Fig. 3, for simplicity, illustrates headset connections 8 to the driver 3 and a single backseat passenger 4 connections to several passengers on back and front passengers seats can be provided according to the present invention.

Fig. 4 shows another embodiment of the present invention. One of the backseat passengers 4 wears a hearing aid 9. The hearing aid 9 is connected via a Bluetooth link 8 with a connector 7 of a signal processing means 5. The operation of the in-vehicle communication system can be performed by utilizing the microphones 1 and loudspeakers 2 mounted in the vehicle and the acoustic signals designated to be output by the loudspeaker 2 closest to the passenger who wears a hearing aid are additionally output to the hearing aid 9 via the Bluetooth link.

The driver and the other backseat passenger in Fig. 4 may also wear hearing aids or headsets connected via cable or wireless connections to the connectors 7 utilized for input and output of acoustic signals into and from signal processing means 5.

Whereas headsets and hearing aids are explicitly described as components of the in-vehicle communication system, other related device, as, e.g., supplemental telephone receiver commonly supplied with hands-free sets, can be connected to the connectors 7 for an improved communication in passenger compartments. Obviously this invention can similarly been carried out in compartments in trains, air crafts etc. instead of automobile cabins.

The previously discussed examples are not intended as limitations but serve as examples illustrating features and advantages of the invention. It is to be understood that some or all of the above described features can also be combined in different ways, as defined by the appended claims.

## Claims

1. Indoor communication system mounted in or in proximity to a passenger compartment, comprising:
at least one microphone (1) mounted in the passenger compartment;
at least one loudspeaker (2) mounted in the passenger compartment;
a signal processing means (5) mounted in the passenger compartment, wherein the signal processing means (5) comprises an input for receiving an acoustic input signal from the at least one microphone (1) and an output for providing an acoustic output signal based on the acoustic input signal to at least one of the at least one loudspeaker (2); and
a mobile audio device (6; 9) comprising a microphone and/or a loudspeaker, wherein the signal processing means (5) comprises an input for receiving an acoustic input signal from the microphone of the mobile audio device (6; 9) and an output for providing an acoustic output signal to the loudspeaker of the mobile audio device (6; 9).

2. System according to claim 1, further comprising a control means configured to control the signal processing means (5) to transmit an audio signal to the at least one mobile audio device and/or to the at least one loudspeaker (2) mounted in the passenger compartment and to receive an audio signal from the at least one mobile audio device and/or from the at least one microphone (1) mounted in the passenger compartment.

3. System according to claim 2, wherein the control means is configured to automatically switch off at least one microphone (1) mounted in the passenger compartment and/or to automatically switch off or reduce the volume of the at least one loudspeaker (2) mounted in the passenger compartment in the vicinity of the at least one mobile audio device (6; 9), if the at least one mobile audio device (6; 9) is connected to the signal processing means (5).

4. System according to claim 2 or 3, wherein directional microphones or arrays of directional microphones are mounted in the passenger compartment and the control means is configured to switch off at least one of the directional microphones directed to a passenger who is equipped with one of the mobile audio devices (6; 9).

5. System according to one of the above claims, wherein the at least one mobile audio device (6; 9) is connected to the signal processing means (5) by a cable connection or a wireless connection, in particular, a Bluetooth connection.

6. System according to one of the above claims, wherein the mobile audio device (6; 9) is a headset or a hearing aid.

7. System according to one of the above claims, wherein the passenger compartment is a vehicular cabin of an automobile and at least one microphone (1) and at least one loudspeaker (2) is mounted close to each passenger seat.

8. System according to one of the above claims, wherein the communication system further comprises a voice control means comprising a speech recognition means.

9. System according to one of the above claims, wherein the communication system further comprises a transceiver for communication with a remote party outside the passenger compartment; and
wherein the control means is configured to control the signal processing means to transmit an acoustic signal received from the remote party to at least one of the mobile audio devices without transmitting an audio signal received from a microphone (1) mounted in the passenger compartment or received from one of the at least one mobile audio devices to the at least one of the mobile audio devices that receives the acoustic signal from the remote party via the signal processing means.

10. System according to claim 9, wherein the at least one of the mobile audio devices is a headset comprising a Bluetooth link.

11. Method for indoor communication in a passenger compartment comprising the steps of:
detecting whether at least one passenger is equipped with a mobile audio device (6; 9) and generating a detection signal according to the detection result;
inputting an audio signal from at least one microphone (1) mounted in the passenger compartment or from a first mobile audio device (6; 9) to a signal processing means (5) based on the detection signal; and
processing the audio signal by the signal processing means (5) and outputting the processed audio signal to at least one second mobile audio device (6; 9) and/or at least one loudspeaker (2) mounted in the passenger compartment based on the detection signal.

12. Method according to claim 11, wherein if the first mobile audio device (6; 9) is present, the audio signal is input from the first mobile audio device (6; 9) to the signal processing means (5) and if the second mobile audio device (6; 9) is present, the audio signal is output by the signal processing means (5) to the second mobile audio device (6; 9).

13. Method according to claim 11 or 12, comprising
inputting the audio signal from the first mobile audio device (6; 9) to the signal processing means (5) without inputting an audio signal from a microphone (1) mounted in the passenger compartment in the vicinity of the first mobile audio device (6; 9) and/or outputting the processed audio signal to the at least one second mobile audio device (6; 9) without outputting the processed audio signal to a loudspeaker (2) mounted in the passenger compartment in the vicinity of the at least one second mobile audio device (6; 9).

14. Method according to one of the claims 11 - 13, comprising, if it is detected that at least one passenger is equipped with a mobile audio device (6; 9), switching off a microphone (1) mounted in the passenger compartment in the vicinity of the passenger who is equipped with the mobile audio device (6; 9).

## Patentansprüche

1. Innenraumkommunikationssystem, das in oder in der Nähe einer Passagierkabine installiert ist, und das umfasst:
zumindest ein Mikrofon (1), das in der Passagierkabine installiert ist;
zumindest einen Lautsprecher (2), der in der Passagierkabine installiert ist;
eine Signalverarbeitungseinrichtung (5), die in der Passagierkabine installiert ist, wobei die Signalverarbeitungseinrichtung (5) einen Eingang zum Empfangen eines akustischen Eingangssignals von dem zumindest einen Mikrofon (1) und einen Ausgang zum Liefern eines akustischen Ausgabesignals auf der Grundlage des akustischen Eingangssignals an den zumindest einen Lautsprecher (2) umfasst; und
eine mobile Audioeinrichtung (6; 9), die ein Mikrofon und/oder einen Lautsprecher umfasst, wobei die Signalverarbeitungseinrichtung (5) einen Eingang zum Empfangen eines akustischen Eingangssignals von dem Mikrofon der mobilen Audioeinrichtung (6; 9) und einen Ausgang zum Liefern eines akustischen Ausgabesignals an den Lautsprecher der mobilen Audioeinrichtung (6; 9) umfasst.

2. System gemäß Anspruch 1, das weiterhin eine Steuereinrichtung umfasst, die dazu ausgebildet ist, die Signalverarbeitungseinrichtung (5) dahingehend zu steuern, ein Audiosignal an die zumindest eine mobile Audioeinrichtung und/oder an den zumindest einen Lautsprecher (2), der in der Passagierkabine installiert ist, zu senden und ein Audiosignal von der zumindest einen mobilen Audioeinrichtung und/oder von dem zumindest einen Mikrofon (1), das in der Passagierkabine installiert ist, zu empfangen.

3. System gemäß Anspruch 2, in dem die Steuereinrichtung dazu ausgebildet ist, automatisch zumindest ein Mikrofon (1) auszuschalten, das in der Passagierkabine installiert ist, und/oder automatisch den zumindest einen Lautsprecher (2) auszuschalten, der in der Passagierkabine in der Nähe der zumindest einen mobilen Audioeinrichtung (6; 9) installiert ist, oder seine Lautstärke zu verringern, wenn die zumindest eine mobile Audioeinrichtung (6; 9) mit der Signalverarbeitungseinrichtung (5) verbunden ist.

4. System gemäß Anspruch 2 oder 3, in dem Richtmikrofone oder Anordnungen von Richtmikrofonen in der Passagierkabine installiert sind und die Steuereinrichtung dazu ausgebildet ist, zumindest eines der Richtmikrofone auszuschalten, das auf einen Passagier gerichtet ist, der mit einem der mobilen Audioeinrichtungen (6; 9) ausgestattet ist.

5. System gemäß einem der vorhergehenden Ansprüche, in dem die zumindest eine mobile Audioeinrichtung (6; 9) über eine Kabelverbindung oder eine Drahtlosverbindung, insbesondere eine Bluetooth - Verbindung, mit der Signalverarbeitungseinrichtung (5) verbunden ist.

6. System gemäß einem der vorhergehenden Ansprüche, in dem die mobile Audioeinrichtung (6; 9) ein Headset oder ein Hörgerät ist.

7. System gemäß einem der vorhergehenden Ansprüche, in dem die Passagierkabine eine Fahrzeugkabine eines Automobils ist und zumindest ein Mikrofon (1) und zumindest ein Lautsprecher (2) nahe jedem Passagiersitz installiert ist.

8. System gemäß einem der vorhergehenden Ansprüche, in dem das Kommunikationssystem eine Sprachsteuerungseinrichtung umfasst, die eine Spracherkennungseinrichtung umfasst.

9. System gemäß einem der vorhergehenden Ansprüche, in dem das Kommunikationssystem weiterhin einen Transceiver zur Kommunikation mit einer entfernten Partei außerhalb der Passagierkabine umfasst; und
in dem die Steuereinrichtung dazu ausgebildet ist, die die Signalverarbeitungseinrichtung dahingehend zu steuern, ein akustisches Signal, das von der entfernten Partei empfangen wird, an zumindest eine der mobilen Audioeinrichtungen zu senden, ohne ein Audiosignal, das von einem Mikrofon (1) empfangen wird, das
in der Passagierkabine installiert ist, oder von einer der zumindest einen mobilen Audioeinrichtung empfangen wird, an die zumindest eine der mobilen Audioeinrichtungen zu senden, die das akustische Signal von der entfernten Partei über die Signalverarbeitungseinrichtung empfängt.

10. System gemäß Anspruch 9, in dem die zumindest eine der mobilen Audioeinrichtungen ein Headset ist, das eine Bluetooth - Verbindung umfasst.

11. Verfahren zur Innenraumkommunikation in einer Passagierkabine, das die Schritte umfasst:
Detektieren, ob zumindest ein Passagier mit einer mobilen Audioeinrichtung (6; 9) ausgestattet ist, und Erzeugen eines Detektionssignals gemäß dem Detektionsergebnis;
Eingeben eines Audiosignals von zumindest einem Mikrofon (1), das in der Passagierkabine installiert ist, oder von einer ersten mobilen Audioeinrichtung (6; 9) in eine Signalverarbeitungseinrichtung (5) auf der Grundlage des Detektionssignals; und
Verarbeiten des Audiosignals durch die Signalverarbeitungseinrichtung (5) und Ausgeben des verarbeiteten Audiosignals an zumindest eine zweite mobile Audioeinrichtung (6; 9) und/oder an zumindest einen Lautsprecher (2), der in der Passagierkabine installiert ist, auf der Grundlage des Detektionssignals.

12. Verfahren gemäß Anspruch 11, in dem, wenn die erste mobile Audioeinrichtung (6; 9) vorhanden ist, das Audiosignal von der ersten mobilen Audioeinrichtung (6; 9) in die Signalverarbeitungseinrichtung (5) eingegeben wird und, wenn die zweite mobile Audioeinrichtung (6; 9) vorhanden ist, das Audiosignal von der Signalverarbeitungseinrichtung (5) an die zweite mobile Audioeinrichtung (6; 9) ausgegeben wird.

13. Verfahren gemäß Anspruch 11 oder 12, das umfasst
Eingeben des Audiosignals von der ersten mobilen Audioeinrichtung (6; 9) in die Signalverarbeitungseinrichtung (5) ohne Eingeben eines Audiosignals von einem Mikrofon (1), das in der Passagierkabine in der Nähe der ersten mobilen Audioeinrichtung (6; 9) installiert ist, und/oder Ausgeben des verarbeiteten Audiosignals an die zumindest eine zweite mobile Audioeinrichtung (6; 9), ohne das verarbeitete Audiosignal an einen Lautsprecher (2) auszugeben, der in der Passagierkabine in der Nähe der zumindest einen zweiten mobilen Audioeinrichtung (6; 9) installiert ist.

14. Verfahren gemäß einem der Ansprüche 11 - 13, das, wenn detektiert wird, dass zumindest ein Passagier mit einer mobilen Audioeinrichtung (6; 9) ausgestattet ist, das Ausschalten eines Mikrofons (1), das in der Passagierkabine in der Nähe des Passagiers installiert ist, der mit der mobilen Audioeinrichtung (6; 9) ausgestattet ist, umfasst.

## Revendications

1. Système de communication intérieur monté dans un habitacle ou à proximité de celui-ci, comprenant :
au moins un microphone (1) monté dans l'habitacle;
au moins un haut-parleur (2) monté dans l'habitacle;
des moyens de traitement de signal (5) montés dans l'habitacle, dans lequel les moyens de traitement de signal (5) comprennent une entrée pour recevoir un signal acoustique d'entrée dudit au moins un microphone (1) et une sortie pour fournir un signal acoustique de sortie basé sur le signal acoustique d'entrée à au moins l'un desdits au moins un haut-parleurs (2) ; et
un dispositif audio mobile (6 ; 9) comprenant un microphone et/ou un haut-parleur, dans lequel les moyens de traitement de signal (5) comprennent une entrée pour recevoir un signal acoustique d'entrée du microphone du dispositif audio mobile (6 ; 9) et une sortie pour fournir un signal acoustique de sortie au haut-parleur du dispositif audio mobile (6 ; 9).

2. Système selon la revendication 1, comprenant en outre des moyens de commande configurés pour commander les moyens de traitement de signal (5) pour transmettre un signal audio audit au moins un dispositif audio mobile et/ou audit au moins un haut-parleur (2) montés dans l'habitacle et pour recevoir un signal audio dudit au moins un dispositif audio mobile et/ou dudit au moins un microphone (1) montés dans l'habitacle.

3. Système selon la revendication 2, dans lequel les moyens de commande sont configurés pour couper automatiquement au moins un microphone (1) monté dans l'habitacle et/ou pour couper ou réduire automatiquement le volume dudit au moins un haut-parleur (2) monté dans l'habitacle à proximité dudit au moins un dispositif audio mobile (6 ; 9), si ledit au moins un dispositif audio mobile (6 ; 9) est connecté aux moyens de traitement de signal (5).

4. Système selon la revendication 2 ou 3, dans lequel des microphones directionnels ou des réseaux de microphones directionnels sont montés dans l'habitacle et les moyens de commande sont configurés pour couper au moins l'un des microphones directionnels dirigés vers un passager qui est équipé d'un des dispositifs audio mobiles (6 ; 9).

5. Système selon l'une des revendications ci-dessus, dans lequel ledit au moins un dispositif audio mobile (6 ; 9) est connecté aux moyens de traitement de signal (5) par une connexion par câble ou une connexion sans fil, en particulier, une connexion Bluetooth.

6. Système selon l'une des revendications ci-dessus, dans lequel le dispositif audio mobile (6 ; 9) est un casque acoustique ou un appareil auditif.

7. Système selon l'une des revendications ci-dessus, dans lequel l'habitacle est un habitacle de véhicule d'une automobile et au moins un microphone (1) et au moins un haut-parleur (2) sont montés à proximité de chaque siège de passager.

8. Système selon l'une des revendications ci-dessus, dans lequel le système de communication comprend en outre des moyens de commande vocale comprenant des moyens de reconnaissance vocale.

9. Système selon l'une des revendications ci-dessus, dans lequel le système de communication comprend en outre un émetteur-récepteur pour communiquer avec un tiers à distance à l'extérieur de l'habitacle ; et
dans lequel les moyens de commande sont configurés pour commander les moyens de traitement de signal pour transmettre un signal acoustique reçu du tiers à distance à au moins l'un des dispositifs audio mobiles sans transmettre un signal audio reçu d'un microphone (1) monté dans l'habitacle ou reçu de l'un desdits au moins un dispositifs audio mobiles audit au moins un des dispositifs audio mobiles qui reçoit le signal acoustique du tiers à distance par l'intermédiaire des moyens de traitement de signal.

10. Système selon la revendication 9, dans lequel ledit au moins un des dispositifs audio mobiles est un casque acoustique comprenant une liaison Bluetooth.

11. Procédé pour une communication intérieure dans un habitacle comprenant les étapes consistant à :
détecter si au moins un passager est équipé d'un dispositif audio mobile (6 ; 9) et générer un signal de détection en fonction du résultat de détection ;
appliquer un signal audio provenant d'au moins un microphone (1) monté dans l'habitacle ou d'un premier dispositif audio mobile (6 ; 9) à des moyens de traitement de signal (5) sur la base du signal de détection ; et
traiter le signal audio par les moyens de traitement de signal (5) et délivrer le signal audio traité à au moins un deuxième dispositif audio mobile (6 ; 9) et/ou au moins un haut-parleur (2) montés dans l'habitacle sur la base du signal de détection.

12. Procédé selon la revendication 11, dans lequel, si le premier dispositif audio mobile (6 ; 9) est présent, le signal audio est appliqué du premier dispositif audio mobile (6 ; 9) aux moyens de traitement de signal (5) et, si le deuxième dispositif audio mobile (6 ; 9) est présent, le signal audio est délivré par les moyens de traitement de signal (5) au deuxième dispositif audio mobile (6 ; 9).

13. Procédé selon la revendication 11 ou 12, comprenant les étapes consistant à :
appliquer le signal audio provenant du premier dispositif audio mobile (6 ; 9) aux moyens de traitement de signal (5) sans appliquer un signal audio provenant d'un microphone (1) monté dans l'habitacle à proximité du premier dispositif audio mobile (6 ; 9) et/ou délivrer le signal audio traité audit au moins un deuxième dispositif audio mobile (6 ; 9) sans délivrer le signal audio traité à un haut-parleur (2) monté dans l'habitacle à proximité dudit au moins un deuxième dispositif audio mobile (6 ; 9).

14. Procédé selon l'une des revendications 11 à 13, comprenant, s'il est détecté qu'au moins un passager est équipé d'un dispositif audio mobile (6 ; 9), la coupure d'un microphone (1) monté dans l'habitacle à proximité du passager qui est équipé du dispositif audio mobile (6 ; 9).
